# EUROPEAN PATENT APPLICATION

(11) **EP 3 026 281 A1**
(43) Date of publication of application: **01.06.2016**
(21) Application number: 14828725.3
(22) Date of filing: 18.07.2014
(51) Int. Cl.: F16C 33/76, F16C 19/36, F16C 33/46, F16C 33/58

(54) **TAPERED ROLLER BEARING AND POWER TRANSMISSION DEVICE USING TAPERED ROLLER BEARING**

(30) Priority: 22.07.2013 JP 2013151560
(71) Applicant: JTEKT Corporation, Osaka-shi, Osaka 542-8502 (JP)
(72) Inventor: FURUSAWA, Shigeaki, Osaka-shi Osaka 542-8502 (JP); TACHI, Hiroshi, Osaka-shi Osaka 542-8502 (JP)
(74) Representative: Winter, Brandl, Fürniss, Hübner, Röss, Kaiser, Polte - Partnerschaft mbB
(86) International application number: PCT/JP2014/069168
(87) International publication number: WO 2015/012214

(57) **Abstract**

A tapered roller bearing including: an inner ring; an outer ring; a plurality of tapered rollers; and a retainer. A small diameter side annular portion is formed in an end portion of the retainer located on a small diameter side of an inner ring raceway surface. A seal member having hardness lower than that of the retainer is provided on the small diameter side annular portion. The seal member includes a lip portion which slide-contacts or is positioned close to at least one circumferential surface of an outer circumferential surface of the inner ring and an inner circumferential surface of the outer ring.

## Description

### Technical Field

An aspect of the present invention relates to a tapered roller bearing and a power transmission device using the tapered roller bearing.

### Background Art

For example, Patent Document 1 discloses a tapered roller bearing which suppresses an inflow amount of lubricating oil into the bearing to reduce torque due to agitating resistance of the lubricating oil.

In the tapered roller bearing, a small diameter side end portion of a retainer made of metal (mainly made of iron) has a folded portion that is folded radially inward. The folded portion is opposed to the outer diameter of a cylindrical portion of an inner ring through a gap so as to form a labyrinth between the folded portion and the inner ring.

### Related Art Documents

### Patent Documents

Patent Document 1: JP-A-2005-69421

### Summary of the Invention

### Problem to be Solved by the Invention

In the tapered roller bearing disclosed in Patent Document 1, the retainer and the inner ring may damage each other when the folded portion formed in the small diameter side end portion of the retainer made of metal touches the outer diameter of the cylindrical portion of the inner ring.

It is therefore necessary to set the labyrinth gap between the inner diameter edge of the folded portion and the outer circumferential surface of the inner ring to be larger. Thus, it may be difficult to satisfactorily suppress the inflow amount of the lubricating oil into the bearing.

It can be therefore considered that the retainer is made of a material having hardness lower than that of the inner ring, for example, a resin material, and the small diameter side end portion of the retainer made of resin is located as close to the outer circumferential surface of the inner ring as possible, so that the labyrinth can be formed between the small diameter side end portion of the retainer and the outer circumferential surface of the inner ring.

However, the retainer made of resin has a tendency to be short of rigidity, as compared with a retainer made of metal. It is therefore estimated that there is a case where the retainer made of resin cannot be used.

In consideration of the foregoing problem, an object of one aspect of the invention is to provide a tapered roller bearing and a power transmission device using the tapered roller bearing, capable of well suppressing an inflow amount of lubricating oil into the bearing while securing rigidity required in a retainer.

### Means for Solving the Problem

A first aspect of the invention includes a tapered roller bearing including: an inner ring including an outer circumferential surface in which an inner ring raceway surface is formed to have a tapered shaft shape; an outer ring disposed coaxially with the inner ring on an outer circumferential side of the inner ring and including an inner circumferential surface in which an outer ring raceway surface is formed to have a tapered hole shape; a plurality of tapered rollers disposed rollably in an annular space between the inner ring raceway surface and the outer ring raceway surface; and a retainer holding the tapered rollers, wherein a small diameter side annular portion is formed in an end portion of the retainer located on a small diameter side of the inner ring raceway surface, wherein a seal member having hardness lower than that of the retainer is provided on the small diameter side annular portion, and wherein the seal member includes a lip portion which slide-contacts or is positioned close to at least one circumferential surface of the outer circumferential surface of the inner ring and the inner circumferential surface of the outer ring.

In the first aspect, the seal member provided on the small diameter side annular portion of the retainer has hardness lower than that of the retainer. Accordingly, even when the lip portion of the seal member contacts at least one circumferential surface of the outer circumferential surface of the inner ring and the inner circumferential surface of the outer ring, the circumferential surface is hardly damaged.

Thus, the lip portion of the seal member can be made to slide-contact or be positioned close to at least one circumferential surface of the outer circumferential surface of the inner ring and the inner circumferential surface of the outer ring so as to well suppress the inflow amount of lubricating oil into the bearing.

A second aspect of the invention includes the tapered roller bearing according to the first aspect, wherein a small collar portion is formed in the outer circumferential surface of the inner ring adjacently to a small diameter side end portion of the inner ring raceway surface, wherein an axial extension portion having a diameter smaller than that of the small collar portion and extending axially outward is formed in an end portion of the inner ring located on an axially outer side of the small collar portion, and wherein the seal member includes an inner diameter side lip portion which slide-contacts or is positioned close to an outer circumferential surface of the axial extension portion.

According to the second aspect, the inner diameter side lip portion of the seal member slide-contacts or is positioned close to the outer circumferential surface of the axial extension portion of the inner ring, whereby lubricating oil can be prevented from flowing into the bearing from between the inner diameter side lip portion of the seal member and the axial extension portion of the inner ring.

A third aspect of the invention includes the tapered roller bearing according to the first or second aspect, wherein the seal member includes an outer diameter side lip portion which slide-contacts or is positioned close to the inner circumferential surface of the outer ring.

According to the third aspect, the outer diameter side lip portion of the seal member slide-contacts or is positioned close to the inner circumferential surface of the outer ring, whereby lubricating oil can be well suppressed from flowing into the bearing from between the outer diameter side lip portion of the seal member and the inner circumferential surface of the outer ring.

A fourth aspect of the invention includes the tapered roller bearing according to the first aspect, wherein an axial extension portion having a diameter smaller than that of a small diameter side end portion of the inner ring raceway surface of the inner ring and extending axially outward is formed on the small diameter side end portion, wherein a collar portion is formed in an outer circumferential surface of a distal end portion of the axial extension portion, and wherein the seal member includes an inner diameter side lip portion which slide-contacts or is positioned close to an axially inner side surface of the collar portion.

According to the fourth aspect, the inner diameter side lip portion of the seal member slide-contacts or is positioned close to the axially inner side surface of the collar portion formed in the outer circumferential surface of the distal end portion of the axial extension portion, whereby lubricating oil can be well suppressed from flowing into the bearing from between the inner diameter side lip portion of the seal member and the axially inner side surface of the collar portion of the inner ring.

In addition, the inner diameter side lip portion of the seal member slide-contacts or is positioned close to the axially inner side surface of the collar portion, whereby the retainer and the tapered rollers can be restricted from moving toward the small diameter side end portion of the inner ring raceway surface of the inner ring. Thus, the retainer and the tapered rollers can be suppressed from leaving the inner ring accidentally.

A fifth aspect of the invention includes the tapered roller bearing according to any one of the first to fourth aspects, wherein the lip portion of the seal member is inclined or curved with respect to an axial direction so as to extend in a direction in which lubricating oil arriving at the lip portion is guided toward an outside of the bearing.

According to the fifth aspect, the lip portion (inner diameter side lip or outer diameter side lip) of the seal member is inclined or curved with respect to the axial direction so as to extend in the direction in which lubricating oil arriving at the lip portion is guided toward the outside of the bearing. Thus, the lubricating oil can be remarkably effectively suppressed from flowing into the bearing.

A sixth aspect of the invention includes a power transmission device including: a tapered roller bearing according to any one of the first to fifth aspects as a tapered roller bearing which rotatably supports a rotary shaft inside the power transmission device.

According to the sixth aspect, the tapered roller bearing according to any one of the first to fifth aspects is used, whereby it is possible to well suppress an inflow amount of lubricating oil into the bearing to reduce torque.

### Advantages of the Invention

According to aspects of the invention, it is possible to well suppress an inflow amount of lubricating oil into the bearing to reduce torque.

### Brief Description of the Drawings

Fig. 1 is an axially sectional view showing a tapered roller bearing according to Embodiment 1 of the invention.
Fig. 2 is an enlarged axially sectional view showing the relationship among an inner ring, an outer ring, a tapered roller and a retainer in the same tapered roller bearing.
Fig. 3 is an axially sectional view showing a differential device as a power transmission device using the tapered roller bearing according to Embodiment 1.
Fig. 4 is an enlarged axially sectional view showing the relationship among an inner ring, an outer ring, a tapered roller and a retainer in a tapered roller bearing according to Embodiment 2 of the invention.
Fig. 5 is an enlarged axially sectional view showing the relationship among an inner ring, an outer ring, a tapered roller and a retainer in a tapered roller bearing according to Embodiment 3 of the invention.
Fig. 6 is an enlarged axially sectional view showing the relationship among an inner ring, an outer ring, a tapered roller and a retainer in a tapered roller bearing according to Embodiment 4 of the invention.

### Mode for Carrying Out the invention

Modes for carrying out the invention will be described along its embodiments.

### Embodiment 1

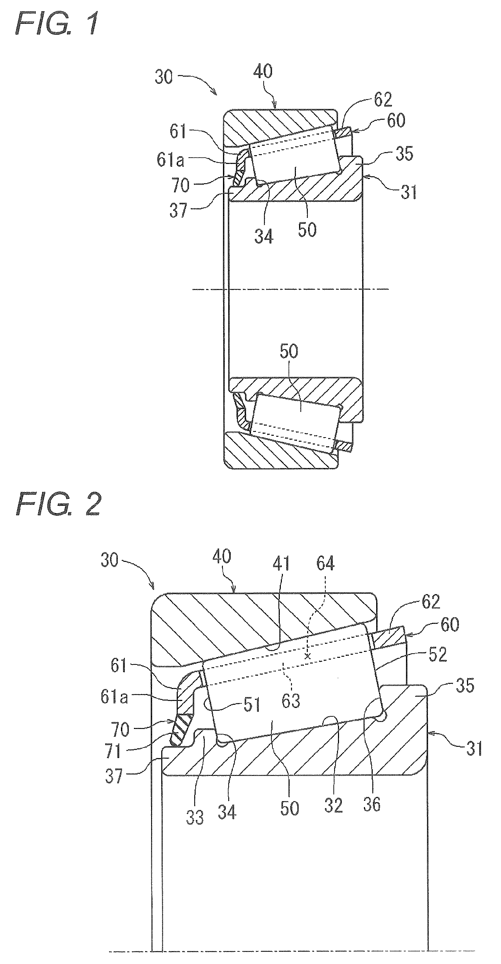

Embodiment 1 of the invention will be described with reference to Fig. 1 and Fig. 2.

As shown in Fig. 1 and Fig. 2, a tapered roller bearing 30 has an inner ring 31, an outer ring 40, a plurality of tapered rollers 50 and a retainer 60.

The inner ring 31 is formed into a cylindrical shape with a center hole. An inner ring raceway surface 32 is formed in the outer circumferential surface of the inner ring 31. The inner ring raceway surface 32 has a tapered shaft shape having a diameter which increases from one end portion toward the other end portion

In addition, as shown in Fig. 2, a small collar portion 33 is formed in the outer circumferential surface of the one end portion of the inner ring 31 (on the small diameter side of the inner ring raceway surface 32), and a large collar portion 35 is formed in the outer circumferential surface of the other end portion (on the large diameter side of the inner ring raceway surface 32). The small collar portion 33 has a guide surface 34 for guiding a small end surface 51 of each tapered roller 50. The large collar portion 35 has a guide surface 36 for guiding a large end surface 52 of each tapered roller 50.

In addition, in this Embodiment 1, an axial extension portion 37 having a diameter smaller than that of the small collar portion 33 and extending axially outward is formed in the end portion of the inner ring 31 located on the axially outer side of the small collar portion 33 of the inner ring 31.

As shown in Fig. 2, the outer ring 40 is disposed coaxially with the inner ring 31 on the outer circumferential side of the inner ring 31 through an annular space. The outer ring 40 has a cylindrical shape. An outer ring raceway surface 41 is formed in the inner circumferential surface of the outer ring 40. The outer ring raceway surface 41 has a tapered hole shape having a diameter which increases from one end portion toward the other end portion.

The plurality of tapered rollers 50 retained by the retainer 60 are disposed rollably in the annular space between the inner ring raceways surface 32 of the inner ring 31 and the outer ring raceway surface 41.

The retainer 60 is made of metal such as iron. The retainer 60 has a small diameter side annular portion 61, a large diameter side annular portion 62 and columnar portions 63 integrally. The two annular portions 61 and 62 are arranged axially at a predetermined distance from each other. The columnar portions 63 connect the two annular portions 61 and 62. Pockets 64 for retaining the tapered rollers 50 are formed in portions surrounded by the small diameter side annular portion 61, the large diameter side annular portion 62 and the columnar portions 63, respectively.

In addition, the small diameter side annular portion 61 of the retainer 60 has a flange portion 61 a bent radially inward. A seal member 70 having hardness (rigidity) lower than that of the retainer 60 made of metal is provided on an inner diameter end portion of the flange portion 61 a.

In this Embodiment 1, the seal member 70 is made of an elastic substance such as rubber or soft resin. The seal member 70 is firmly attached to the inner diameter end portion of the flange portion 61 a of the small diameter side annular portion 61 of the retainer 60 integrally therewith by bonding or the like (for example, vulcanized adhesion when the seal member 70 is made of rubber).

In addition, the seal member 70 has an inner diameter side lip portion 71 which slide-contacts or is positioned close to (is positioned with a very small gap) the outer circumferential surface of the axial extension portion 37 of the inner ring 31.

In addition, the inner diameter side lip portion 71 is inclined or curved with respect to the axial direction so as to extend in a direction in which lubricating oil arriving at the inner diameter side lip portion 71 can be guided toward the outside of the bearing.

The tapered roller bearing according to this Embodiment 1 is configured as described above.

Thus, the seal member 70 provided on the flange portion 61 a of the small diameter side annular portion 61 of the retainer 60 has hardness lower than that of the retainer 60. Accordingly, even when the inner diameter side lip portion 71 of the seal member 70 touches the outer circumferential surface of the axial extension portion 37 of the inner ring 31, the outer circumferential surface of the axial extension portion 37 is hardly damaged.

As a result, the inner diameter side lip portion 71 of the seal member 70 can be allowed to slide-contact or be positioned close to the outer circumferential surface of the axial extension portion 37 of the inner ring 31.

When the inner diameter side lip portion 71 of the seal member 70 is allowed to slide-contact or be positioned close to the outer circumferential surface of the axial extension portion 37 of the inner ring 31, it is possible to well suppress lubricating oil from flowing into the bearing from between the inner diameter side lip portion 71 of the seal member 70 and the axial extension portion 37 of the inner ring 31.

That is, when a retainer having high hardness as in the background art is made close to an inner ring with a very small gap therefrom, it is necessary to set the gap at a larger amount because the moving amount (radial direction and axial direction) of the retainer must be estimated to be large enough to prevent the retainer and the inner ring from touching each other.

On the other hand, in Embodiment 1 of the invention, the inner diameter side lip portion 71 of the seal member 70 opposed to the outer circumferential surface of the axial extension portion 37 of the inner ring 31 has hardness (rigidity) lower than that of the retainer 60. Thus, even when the inner diameter side lip portion 71 of the seal member 70 touches the outer circumferential surface of the axial extension portion 37 of the inner ring 31, the outer circumferential surface of the axial extension portion 37 is hardly damaged. It is therefore possible to set the gap amount between the inner diameter side lip portion 71 of the retainer 60 and the inner ring 31 to be smaller than that in the background art.

In addition, in this Embodiment 1, the inner diameter side lip portion 71 of the seal member 70 is inclined or curved with respect to the axial direction so as to extend in a direction in which lubricating oil arriving at the inner diameter side lip portion 71 can be guided toward the outside of the bearing. Accordingly, the effect to suppress the lubricating oil from flowing into the bearing is enhanced.

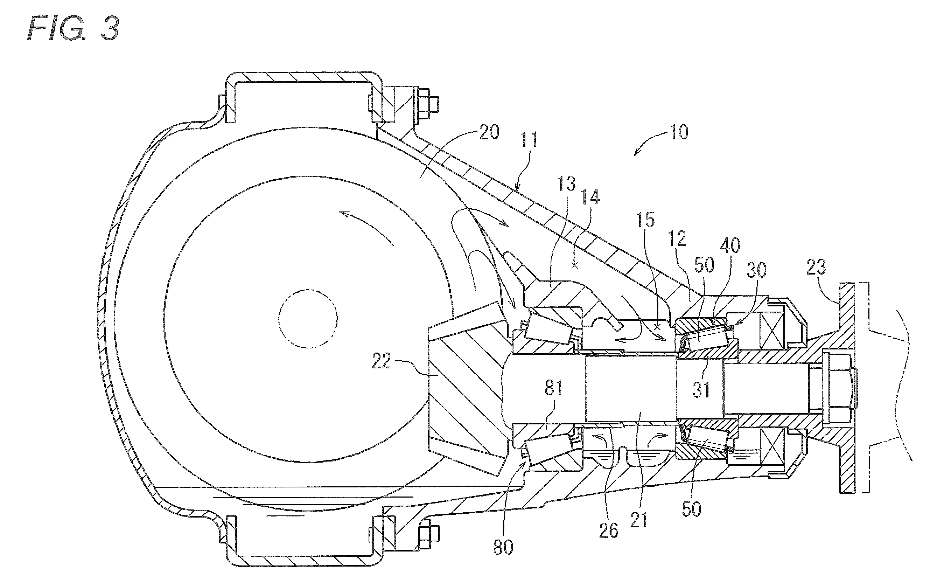

Next, a differential device 10 as a power transmission device using the tapered roller bearing 30 described in the aforementioned Embodiment 1 will be described with reference to Fig. 3.

As shown in Fig. 3, bearing housings 12 and 13 arranged axially at a predetermined interval are formed inside a differential carrier 11 of the differential device 10.

Two front and rear tapered roller bearings 30 and 80 are installed in the two bearing housings 12 and 13 respectively so as to rotatably support front and rear portions of a pinion shaft 21 (corresponding to an example of a rotary shaft).

The tapered roller bearing described in the aforementioned Embodiment 1 is used as at least one of the two tapered roller bearings 30 and 80, that is, as the tapered roller bearing 30.

In addition, of the opposite end portions of the pinion shaft 21, one end portion is protruded from the differential carrier 11, and a companion flange 23 to be connected to a propeller shaft (not shown) is attached to the one end portion. A pinion 22 that can engage with a ring gear 20 attached to a differential case (not shown) in the differential carrier 11 is provided in the other end portion of the pinion shaft 21 so that the pinion 22 can transmit torque. A final speed reduction mechanism is constituted by the ring gear 20 and the pinion 22.

In addition, spacer members 26 are put between inner rings 31 and 81 of the two tapered roller bearings 30 and 80.

In addition, lubricating oil is charged and enclosed into a lower portion inside the differential carrier 11 to reach a predetermined oil level.

Incidentally, a differential gear mechanism is built in the differential case (not shown) as known well.

As shown in Fig. 3, a lubricating flow passage 14 is formed in an upper portion of the bearing housing 12 in the differential carrier 11 so that lubricating oil scooped up by rotation of the ring gear 20 can flow into the lubricating flow passage 14. A supply port 15 through which the lubricating oil flowing in the lubricating flow passage 14 is supplied to the two tapered roller bearings 30 and 80 is formed in an upper portion between the two bearing housings 12 and 13.

The differential device 10 as a power transmission device using the tapered roller bearing 30 described in the aforementioned Embodiment 1 is configured as described above.

Accordingly, lubricating oil stored in a lower portion of the differential carrier 11 is agitated due to rotation of the ring gear 20, for example, when a vehicle is traveling. Thus, a part of the lubricating oil flows into the lubricating flow passage 14 and flows toward the supply port 15. Then, the lubricating oil is supplied to the small diameter side of the annular space between the two front and rear tapered roller bearings 30 and 80 through the supply port 15.

The inner rings 31 and 81 of the two tapered roller bearings 30 and 80 rotate integrally with the pinion shaft 21 rotating due to torque transmitted and received from the ring gear 20. Accordingly, the tapered rollers 50 roll and the retainer 60 rotates.

In addition, the lubricating oil supplied to the small diameter side of the annular space between the two front and rear tapered roller bearings 30 and 80 flows toward the large diameter side of the annular space due to pumping action based on the rolling of the tapered rollers 50. Thus, the lubricating oil is discharged.

The tapered roller bearing described in the aforementioned Embodiment 1 is used as at least one of the two front and rear tapered roller bearings 30 and 80, that is, the tapered roller bearing 30. It is therefore possible to well suppress the inflow amount of lubricating oil into the bearing to reduce torque.

### Embodiment 2

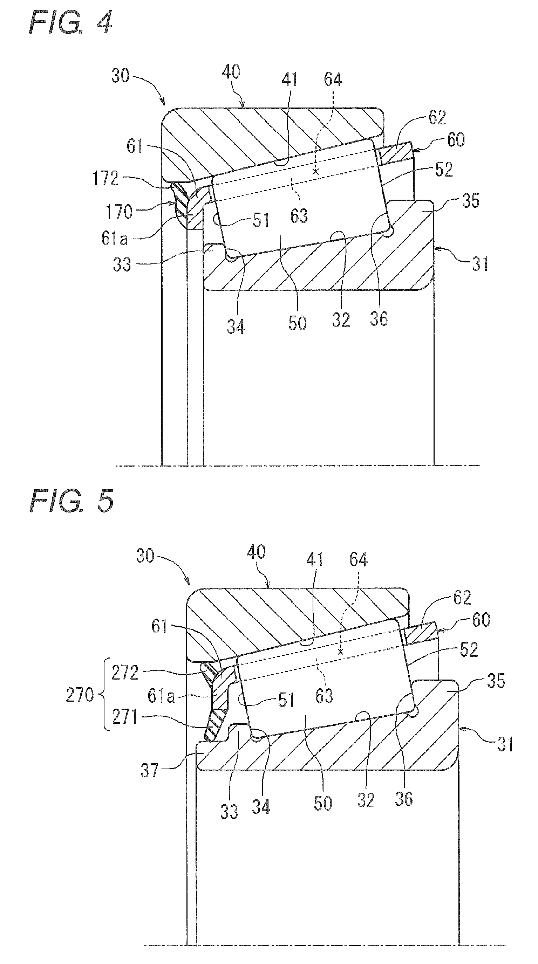

Next, a tapered roller bearing according to Embodiment 2 of the invention will be described with reference to Fig. 4.

In Embodiment 2, a lip portion of a seal member 170 is modified.

That is, in this Embodiment 2, as shown in Fig. 4, the seal member 170 firmly attached to a flange portion 61 a of a small diameter side annular portion 61 of a retainer 60 and having hardness (rigidity) lower than that of the retainer 60 made of metal is provided with an outer diameter side lip portion 172 which slide-contacts or is positioned close to (is positioned with a very small gap) the inner circumferential surface of a small diameter side end portion of an outer ring 40.

Also in this Embodiment 2, the outer diameter side lip portion 172 is inclined or curved with respect to the axial direction so as to extend in a direction in which lubricating oil arriving at the outer diameter side lip portion 172 can be guided toward the outside of the bearing.

The other configuration of this Embodiment 2 is built in the same manner as in Embodiment 1. Therefore, constituents the same as those in Embodiment 1 are referenced correspondingly, and their description will be omitted.

In the tapered roller bearing according to Embodiment 2 configured as described above, the outer diameter side lip portion 172 of the seal member 170 slide-contacts or is positioned close to the inner circumferential surface of the small diameter side end portion of the outer ring 40 so that lubricating oil can be well suppressed from flowing into the bearing from between the outer diameter side lip portion 172 of the seal member 170 and the inner circumferential surface of the small diameter side end portion of the outer ring 40.

In addition, the outer diameter side lip portion 172 of the seal member 170 is inclined or curved with respect to the axial direction so as to extend in a direction in which lubricating oil arriving at the outer diameter side lip portion 172 can be guided toward the outside of the bearing. Accordingly, the effect to suppress the lubricating oil from flowing into the bearing is enhanced.

### Embodiment 3

Next, a tapered roller bearing according to Embodiment 3 of the invention will be described with reference to Fig. 5.

In this Embodiment 3, as shown in Fig. 5, an axial extension portion 37 having a diameter smaller than that of a small collar portion 33 of an inner ring 31 and extending axially outward is formed in an end portion of the inner ring 31 located on the axially outer side of the small collar portion 33, in the same manner as in Embodiment 1.

In addition, a seal member 270 attached firmly and integrally with a flange portion 61 a of a small diameter side annular portion 61 of a retainer 60 and having hardness (rigidity) lower than that of the retainer 60 made of metal is provided with an inner diameter side lip portion 271 which slide-contacts or is positioned close to the outer circumferential surface of the axial extension portion 37 of the inner ring 31, and an outer diameter side lip portion 272 which slide-contacts or is positioned close to the inner circumferential surface of a small diameter side end portion of an outer ring 40.

Also in this Embodiment 2, the inner diameter side lip portion 271 and the outer diameter side lip portion 272 are inclined or curved with respect to the axial direction so as to extend in a direction in which lubricating oil arriving at the inner diameter side lip portion 271 and the outer diameter side lip portion 272 can be guided toward the outside of the bearing.

The other configuration of this Embodiment 3 is built in the same manner as in Embodiment 1. Therefore, constituents the same as those in Embodiment 1 are referenced correspondingly, and their description will be omitted.

In the tapered roller bearing according to Embodiment 3 configured as described above, the inner diameter side lip portion 271 of the seal member 270 slide-contacts or is positioned close to the outer circumferential surface of the axial extension portion 37 of the inner ring 31 so that lubricating oil can be well suppressed from flowing into the bearing from between the inner diameter side lip portion 271 of the seal member 270 and the axial extension portion 37 of the inner ring 31.

In addition, the outer diameter side lip portion 272 of the seal member 270 slide-contacts or is positioned close to the inner circumferential surface of the small diameter side end portion of the outer ring 40 so that lubricating oil can be well suppressed from flowing into the bearing from between the outer diameter side lip portion 272 of the seal member 270 and the inner circumferential surface of the small diameter side end portion of the outer ring 40.

In addition, the inner diameter side lip portion 271 and the outer diameter side lip portion 272 of the seal member 270 are inclined or curved with respect to the axial direction so as to extend in a direction in which lubricating oil arriving at the inner diameter side lip portion 271 and the outer diameter side lip portion 272 can be guided toward the outside of the bearing. Accordingly, the effect to suppress the lubricating oil from flowing into the bearing is enhanced.

### Embodiment 4

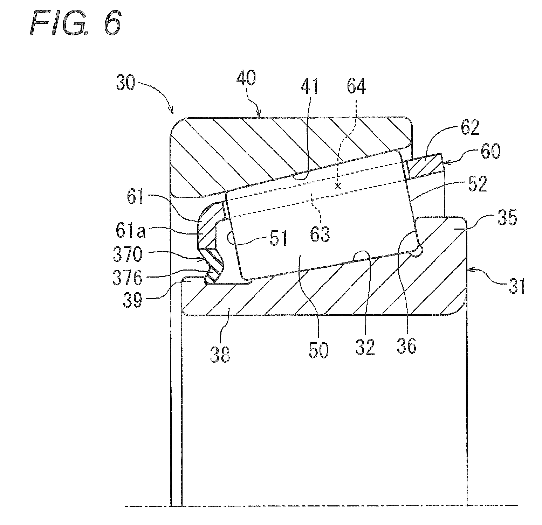

Next, a tapered roller bearing according to Embodiment 4 of the invention will be described with reference to Fig. 6.

In this Embodiment 4, as shown in Fig. 6, an axial extension portion 38 having a diameter smaller than that of a small diameter side end portion of an inner ring raceway surface 32 of an inner ring 31 and extending axially outward from the small diameter side end portion is formed on the small diameter side end portion, and a collar portion 39 is formed in the outer circumferential surface of a distal end portion of the axial extension portion 38 so as to be located axially outward at a distance from the small diameter side end portion of the inner ring raceway surface 32.

A seal member 370 has an inner diameter side lip portion 376 which slide-contacts or is positioned close to (is positioned with a very small gap) the axially inner side surface of the collar portion 39.

In addition, in this Embodiment 4, the inner diameter side lip portion 376 is inclined or curved with respect to the axial direction so as to extend in a direction in which lubricating oil arriving at the inner diameter side lip portion 376 can be guided toward the outside of the bearing.

The other configuration of this Embodiment 4 is built in the same manner as in Embodiment 1. Therefore, constituents the same as those in Embodiment 1 are referenced correspondingly, and their description will be omitted.

In the tapered roller bearing according to Embodiment 4 configured as described above, the inner diameter side lip portion 376 of the seal member 370 slide-contacts or is positioned close to the axially inner side surface of the collar portion 39 formed in the outer circumferential surface of the distal end portion of the axial extension portion 38 of the inner ring 31. Thus, lubricating oil can be well suppressed from flowing into the bearing from between the inner diameter side lip portion 376 of the seal member 370 and the axially inner side surface of the collar portion 39 of the inner ring 31.

In addition, the inner diameter side lip portion 376 of the seal member 370 slide-contacts or is positioned close to the axially inner side surface of the collar portion 39 of the inner ring 31 so that a retainer 60 and a plurality of tapered rollers 50 can be restricted from moving toward a small diameter side end portion of an inner ring raceway surface 32 of the inner ring 31. It is therefore possible to suppress the retainer 60 and the tapered rollers 50 from dropping out accidentally.

In addition, torque can be also reduced when the tapered roller bearing 30 according to any one of Embodiments 2 to 4 is used in a differential device 10 as a power transmission device.

Incidentally, the invention is not limited to the aforementioned embodiments but can be carried out in various forms without departing from the scope and spirit of the invention.

For example, although a differential device is shown as a power transmission device by way of example in the aforementioned Embodiments 1 to 4, a transaxle device or the like may be used.

The present application is based on a Japanese patent application

(Japanese Patent Application No. 2013-151560) filed on July 22, 2013, the contents of which are incorporated herein by reference.

### Description of Reference Signs

10: Differential Device (Power Transmission Device)
11: Differential Carrier
12, 13: Bearing Housing
21: Pinion Shaft (Rotary Shaft)
30: Tapered Roller Bearing
31: Inner Ring
33: Small Collar Portion
35: Large Collar Portion
40: Outer Ring
50: Tapered Roller
60: Retainer
61: Small Diameter Side Annular Portion
70: Seal Member
71: Inner Diameter Side Lip Portion
72: Outer Diameter Side Lip Portion

## Claims

1. A tapered roller bearing comprising:
an inner ring comprising an outer circumferential surface in which an inner ring raceway surface is formed to have a tapered shaft shape;
an outer ring disposed coaxially with the inner ring on an outer circumferential side of the inner ring and comprising an inner circumferential surface in which an outer ring raceway surface is formed to have a tapered hole shape;
a plurality of tapered rollers disposed rollably in an annular space between the inner ring raceway surface and the outer ring raceway surface; and
a retainer holding the tapered rollers,
wherein a small diameter side annular portion is formed in an end portion of the retainer located on a small diameter side of the inner ring raceway surface,
wherein a seal member having hardness lower than that of the retainer is provided on the small diameter side annular portion, and
wherein the seal member comprises a lip portion which slide-contacts or is positioned close to at least one circumferential surface of the outer circumferential surface of the inner ring and the inner circumferential surface of the outer ring.

2. The tapered roller bearing according to claim 1,
wherein a small collar portion is formed in the outer circumferential surface of the inner ring adjacently to a small diameter side end portion of the inner ring raceway surface,
wherein an axial extension portion having a diameter smaller than that of the small collar portion and extending axially outward is formed in an end portion of the inner ring located on an axially outer side of the small collar portion, and
wherein the seal member comprises an inner diameter side lip portion which slide-contacts or is positioned close to an outer circumferential surface of the axial extension portion.

3. The tapered roller bearing according to claim 1 or 2,
wherein the seal member comprises an outer diameter side lip portion which slide-contacts or is positioned close to the inner circumferential surface of the outer ring.

4. The tapered roller bearing according to claim 1,
wherein an axial extension portion having a diameter smaller than that of a small diameter side end portion of the inner ring raceway surface of the inner ring and extending axially outward is formed on the small diameter side end portion,
wherein a collar portion is formed in an outer circumferential surface of a distal end portion of the axial extension portion, and
wherein the seal member comprises an inner diameter side lip portion which slide-contacts or is positioned close to an axially inner side surface of the collar portion.

5. The tapered roller bearing according to any one of claims 1 to 4,
wherein the lip portion of the seal member is inclined or curved with respect to an axial direction so as to extend in a direction in which lubricating oil arriving at the lip portion is guided toward an outside of the bearing.

6. A power transmission device comprising:
a tapered roller bearing according to any one of claims 1 to 5 as a tapered roller bearing which rotatably supports a rotary shaft inside the power transmission device.
